# EUROPEAN PATENT SPECIFICATION

(11) **EP 2 801 858 B1**
(45) Date of publication and mention of the grant of the patent: **28.11.2018**
(21) Application number: 14166728.7
(22) Date of filing: 30.04.2014
(51) Int. Cl.: G02F 1/1335

(54) **Display device**
Anzeigevorrichtung
Dispositif d'affichage

(30) Priority: 09.05.2013 KR 20130052241
(43) Date of publication of application: 12.11.2014
(73) Proprietor: Samsung Electronics Co., Ltd., Gyeonggi-do 16677 (KR)
(72) Inventor: Hyung, Sin Wook, Busan (KR); Ahn, Young Man, Gyeonggi-Do (KR); Lee, Kil Hong, Gyeonggi-do (KR); Lee, Dae Hee, Gyeonggi-do (KR); Choi, Hyeong Sik, Gyeonggi-do (KR)
(74) Representative: Taor, Simon Edward William

(56) References cited:
- CN-A- 102 661 544
- US-A1- 2006 291 236
- SUN Z ET AL: "Research of diffusing plates for LCD backlights", OPTIK, WISSENSCHAFTLICHE VERLAG GMBH, DE, vol. 121, no. 8, 1 April 2010 (2010-04-01) , pages 760-764, XP026941951, ISSN: 0030-4026, DOI: 10.1016/J.IJLEO.2008.11.007 [retrieved on 2009-03-17]

## Description

Embodiments of the present disclosure relate to a display device for ensuring slimness while improving the image quality thereof.

In general, a display device is a device configured to display visual image information in a two-dimensional or three-dimensional form.

In recent years, various types of Flat Panel Display devices having fewer restrictions with respect to installation space while also accomplishing thickness reduction and weight reduction, are being developed having still other benefits, such as easy representation of a large scale screen flatness, and a high quality. Such benefits are not easily provided in a Cathode Ray Tube.

Representative examples of the Flat Panel Display devices include a Liquid Crystal Display (LCD), an Electro-Luminescence Display (ELD), a Field Emission Display (FED), a Plasma Display Panel (PDP), a Thin Film Transistor-LCD (TFT-LCD), and a flexible display.

Among these, the LCD is increasingly being used in various areas, such as a slim television, a slim monitor, and a slim portable display due to the low weight, low power consumption, and a thin thickness of the LCD display.

The LCD displays an image using light emitted from a backlight unit.

Here, the backlight unit is divided into a direct-type backlight unit having a light emitting device arranged at a lower surface of a liquid crystal panel to emit light from the light emitting device, and an edge-lit type light backlight unit having a light emitting device installed at one end of a light guide panel installed at a lower side of a liquid crystal panel to emit light from the light emitting device.

In order to achieve slimness of the LCD, the thickness of a backlight unit is reduced, and as the distance between a light source and a diffusion plate is smaller, there is a limitation on representing an image of the light source on a plane using the diffusion plate, and a portion at which the light source is located has a relatively greater brightness with respect to the rest of the display and thus a bright line will be visible. Here, an image such as an outline of the light source will be visible even with the naked eye.

In addition, if the distance between the light source and the diffusion plate is smaller, a bright line of the light source is visible when viewed from a lateral side. In other words, the brightness uniformity viewed from a front is seen to be different from the brightness uniformity viewed from a lateral side.

In addition, if the thickness of the backlight unit is reduced, the light output from the LED, serving as a light source, is not sufficiently mixed, and thus the color breakup and thus Mura, such as a lack of uniformity, may occur. Accordingly, there is a limitation on attaining slimness of the backlight unit.

CN102661544 relates to a color coating for use in a liquid crystal disply device which acts to reduce chromatic aberration US2006/0291236 discloses a backlight unit for an LCD device, wherein the backlight is arranged for stabilising the bluish colour of the emitted light, thereby rendering uniform the emitted colour entering the LCD.

Therefore, it is an aspect of the present disclosure to provide a display device including blue bead ink that is disposed between a diffusion plate and a backlight unit.

Additional aspects of the disclosure will be set forth in part in the description which follows and, in part, will be obvious from the description, or may be learned by practice of the disclosure.

In accordance with one aspect of the present disclosure, a display device is provided as set out in claim 1.

The pattern may have a color corresponding to the short-wavelength light, and may allow the short-wavelength light to pass therethrough.

The pattern may be a pattern having a blue color.

The pattern having the blue color may be a pattern formed of bead-shaped material having a blue color.

The pattern may be formed in a printing method.

The pattern may have an area larger than an area of the light source.

The pattern of the pattern layer may be provided to have a larger area if a distance between the backlight unit and the diffusion plate is smaller.

The pattern may include mixture material having first material mixed with second material that is bead-shaped material of a blue color.

The pattern may include a first pattern formed on a surrounding area around the light source, and a second pattern formed on a region except for the surrounding area. The first pattern may include first mixture material, and the second pattern may include second mixture material having a smaller percentage of second material when compared to the first mixture material.

The first pattern may be a pattern formed by primarily printing the first mixture material. The second pattern may be a pattern formed by secondarily printing the second mixture material.

The pattern layer may be located between the diffusion plate and the backlight unit, while making contact with the diffusion plate.

In accordance with another aspect of the present disclosure, a display device having a backlight unit emitting light toward a display panel includes a diffusion plate. The diffusion plate may be disposed between the display panel and the backlight unit. The diffusion plate may include a diffusion layer and a pattern layer. The diffusion layer may be configured to diffuse light emitted from the backlight unit. The pattern layer may be provided with a pattern partially formed on the diffusion layer, to compensate for short-wavelength light.

The pattern may include mixture material having first material mixed with second material that has a color different from the first material.

A mixture ratio of the first material and the second material may be determined based on a distance between the backlight unit and a light source.

The first material may be material that is semi-transparent material having a white color. The second material may be material having a blue color.

The second material may include bead shaped material.

The pattern may be a pattern having different mixture materials printed at different regions.

The pattern may include a first pattern formed by primarily printing first mixture material, and a second pattern formed by secondarily printing second mixture material having a smaller percentage of a second material when compared to the first mixture material.

The first pattern may be a pattern printed at a position facing a light source of the backlight unit, and the second pattern may be a pattern printed on a region except for the first pattern.

The light source of the backlight unit may include a plurality of light emitting diodes (LED).

The pattern of the pattern layer may be a pattern formed by irregularly coating blue color ink.

The diffusion layer of the diffusion plate may mix the light emitted from the backlight unit and the light passing through the pattern layer and may diffuse the mixed light.

The pattern layer may increase transmittance of short-wavelength light among the light emitted from the backlight unit.

In accordance with another aspect of the present disclosure, a display device includes a backlight unit to emit light, a pattern layer comprising a first pattern configured to increase transmittance of light in a first wavelength range to be greater than transmittance of light in a second wavelength range, and a second pattern configured to increase transmittance of light in the second wavelength range to be greater than transmittance of light in the first wavelength range, and a diffusion plate to diffuse the light emitted from the backlight unit and transmitted through the patter layer.

In accordance with another aspect of the present disclosure a method of compensating for short-wavelength light among light emitted by a backlight unit of a display device to a diffusion plate is described. The method includes disposing a mask at one side of the diffusion plate and providing a first pattern using a first mixture material and a second pattern using a second mixture material on the mask, wherein the first mixture material is configured to increase transmittance of light in a first wavelength range to be greater than transmittance of light in a second wavelength range in the first pattern, and the second mixture material is configured to increase transmittance of light in the second wavelength range to be greater than transmittance of light in the first wavelength range in the second pattern.

According to another aspect of an invention, there is provided a method of preparing a pattern layer for use in a display device, as set out in claim 8. Preferred features are set out in claims 11 to 13.

As is apparent from the above description, the non-uniform color generated due to the color breakup is improved by use of blue ink having a bead shape that is disposed on the diffusion plate.

Accordingly, the backlight unit removes a representation of the light source in the backlight unit, and the visibility can be ensured.

In addition, the distance between the light source and the diffusion plate is reduced to the minimum while providing a slimness of the display device, thereby providing competitiveness over other manufacturer's display devices.

These and/or other aspects of the disclosure will become apparent and more readily appreciated from the following description of the embodiments, taken in conjunction with the accompanying drawings of which:
FIG. 1 is a drawing illustrating an example of a display device in accordance with an embodiment of the present disclosure;
FIG. 2 is an exploded perspective view illustrating a body of the display device in accordance with an embodiment of the present disclosure;
FIG. 3 is a cross sectional view illustrating a display panel provided in the display device in accordance with an embodiment of the present disclosure;
FIG. 4 is a drawing illustrating an example of a backlight unit, a diffusion plate and a pattern layer that are provided in the display device in accordance with an embodiment of the present disclosure;
FIGS. 5A, 5B, 6, 7A, 7B and 8 are drawings illustrating an example of forming a pattern layer disposed between the backlight unit and the diffusion plate of the display device in accordance with an embodiment of the present disclosure;
FIG. 9 is a drawing illustrating an example of light transmission of the display device in accordance with an embodiment of the present disclosure;
FIG. 10 is a graph showing a by-wavelength light transmittance in accordance with a conventional technology and a by-wavelength light transmittance in accordance with an embodiment of the present disclosure; and
FIG. 11 is a graph showing horizontal y-color coordinates in accordance with a conventional technology and horizontal y-color coordinates in accordance with an embodiment of the present disclosure.

Reference will now be made in detail to the embodiments of the present disclosure, examples of which are illustrated in the accompanying drawings, wherein like reference numerals refer to like elements throughout.

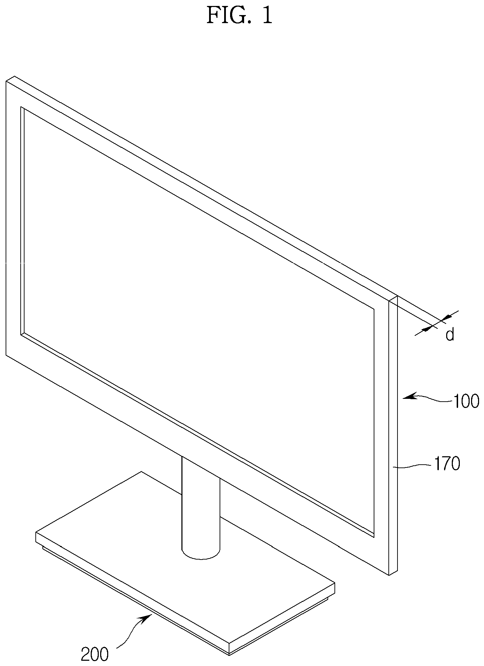

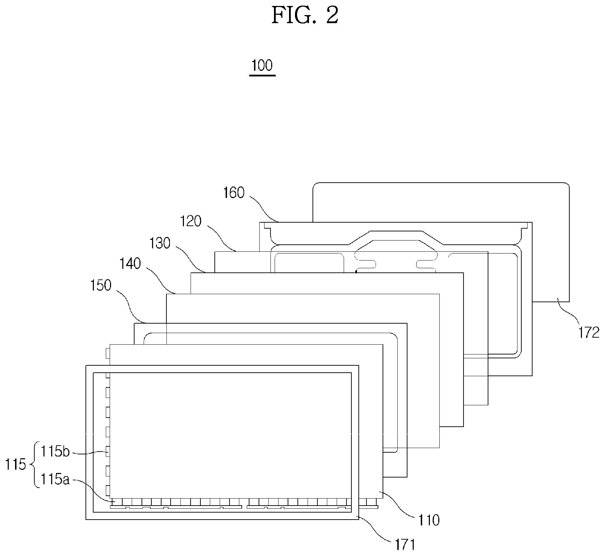

FIG. 1 is a drawing illustrating an example of a display device in accordance with an embodiment of the present disclosure, and FIG. 2 is an exploded perspective view illustrating a body of the display device in accordance with an embodiment of the present disclosure.

A display device 1 is a device configured to display an image, for example, a television, a monitor and a display device of a mobile communication terminal. Referring to FIG. 1, the display device 100 may display an image and output sound. The sound may be output through an external device.

The display device 100 may be supported by a stand 200 mounted at a lower end thereof or alternatively may be installed on a wall with a bracket.
The display device 100 may include a backlight unit 120 and a diffusion plate 130. The display device 100 may be provided in a slim structure having an overall thickness (d) that is reduced by reducing the distance between the backlight unit 120 and the diffusion plate 130, for example, a liquid crystal display device (LCD).

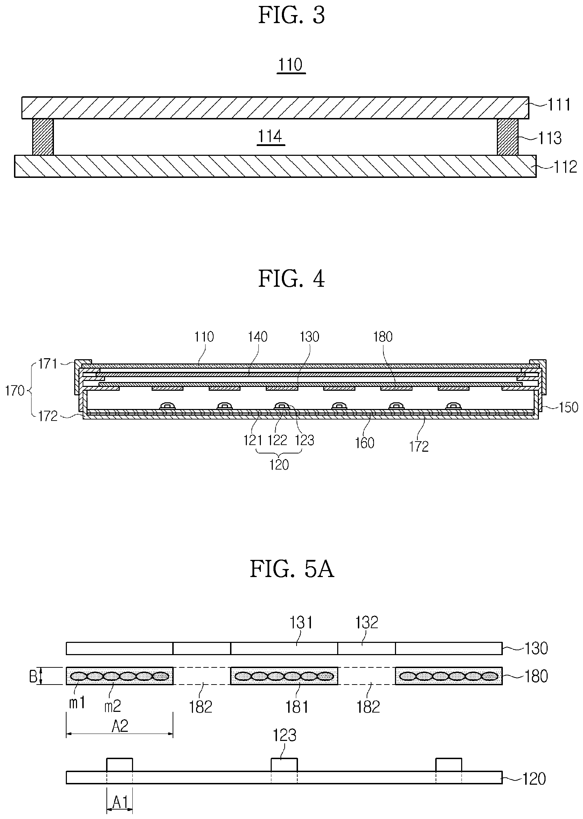

Referring to FIG. 2, the display device 100 may include a display panel 110, the backlight unit 120, the diffusion plate 130, a protection sheet 140, a support member 150, a chassis 160, a housing 170 (171 and 172), and a pattern layer 180, shown in FIG. 5A for example.

The display panel 110 is a panel configured to display image information, such as a text, a number, a photograph, a website, or an icon, by adjusting transmittance of light passing through a liquid crystal layer. The transmittance of light passing through the liquid crystal layer may be adjusted by the intensity of voltage applied.

Referring to FIG. 3, the display panel 110 may include a color filter array panel 111, a thin film transistor (TFT) array panel 112 and a sealant 113. Each of the color filter panel and the TFT panel is formed of glass.

The color filter array panel 111 may include a red color filter, a green color filter and a blue color filter that are formed at regions corresponding to respective pixel electrodes of the TFT panel 112. In addition, a common electrode made of transparent conductive material, such as an Indium Tin Oxide (ITO) or an Indium Zinc Oxide (IZO), is formed on the color filter array panel 111.

The TFT panel 112 of the display panel 110 is disposed in a way that the TFT panel 112 is spaced apart from the color filter array panel 111, and includes a plurality of gate lines, a plurality of data lines and a plurality of pixel electrodes.

The gate lines are disposed in a row direction to transmit a gate signal, and the data lines are disposed in a column direction to transmit a data signal, and the pixel electrode is connected to the gate line and the data line while including a switching device and a sustain capacitor.

Here, the switching device is formed at an intersection of the gate line and the data line, and the sustain capacitor has one terminal connected to an output terminal of the switching device.

The other terminal of the sustain capacitor is connected to a common voltage or the gate line.

The display panel 110 may further include a liquid crystal layer 114 disposed between the color filter array panel 111 and the TFT panel 112. The liquid crystal panel 114 includes sealing material and liquid crystals accommodated in the sealing material.

The liquid crystal layer 114 has an alignment direction that changes according to a voltage applied from the outside, thereby adjusting transmittance of light passing through the liquid crystal layer 114.

Meanwhile, the color filter array panel 111, the TFT panel 112 and the liquid crystal layer 114 of the display panel 110 form a liquid crystal capacitor in cooperation with one another, and the liquid crystal capacitor formed as such is connected to the output terminal of the switching device of the pixel electrode and to a common voltage or a reference voltage.

The sealant 113 is formed at peripheries of the color filter array panel 111 and the TFT panel 112 of the display panel 110, and serves to couple the color filter array panel 111 to the TFT panel 112. The sealant 113 enables the display panel 110 to maintain its shape.

The display panel 110 may further include an image driver 115.

The image driver 115 may include, for example, a first driver 115a driving an X-electrode, and a gate driver 115b driving a Y-electrode.

The X-electrode is a source electrode and the Y-electrode is a gate electrode.

The first driver 115a and the second driver 115b are connected to a driving module (not shown).

The first driver 115a selects a gray scale voltage for each data line based on image data and transmits the selected gray scale voltage to the liquid crystal through the data line.

The second driver 115b transmits an ON/OFF signal based on the image data to a thin film transistor (TFT), that is, a switching device, through a scan line, to turn on/off the TFT.

That is, if a voltage corresponding to each color value is supplied by the first driver 115a, the second driver 115b receives the voltage and connects the voltage to a corresponding pixel.

The source electrode of the TFT is connected to the data line, the gate electrode is connected to the scan line, and a drain electrode of the TFT is connected to the pixel electrode. Such a TFT, when a scan signal is supplied to a scan line, is turned on and supplies a data signal supplied from a data line to the pixel electrode.

A predetermined voltage is applied to the common electrode, and thus an electric field is formed between the common electrode and the pixel electrode. Due to the electric field, an alignment angle of the liquid crystal of the liquid crystal panel is changed, and based on the changed alignment angle, the light transmittance is changed such that a desired image is displayed.

The driving module (not shown) provides a gate control signal, a data control signal, and a gate drive signal and a data drive signal based on a data signal that is related to a data control signal and a data signal to the gate line and the data line formed on the TFT panel 112, thereby implementing a desired image on the display panel 110. This will be described in detail.

The backlight unit 120 is a light source device emitting light from a rear side of the display panel 110, and may be classified as a Direct LED light source device. That is, since the display panel 110 does not emit light from the liquid crystal, an image is represented by adjusting the transmittance and color of light emitted from the backlight unit 120.

Referring to FIG. 4, the backlight unit 120 may include, for example, a base 121, an optical driver 122 fixedly mounted on the base 121, and a plurality of light sources 123 emitting light by use of power supplied from the optical driver 122.

Here, the light source 123 is a light emitting diode (LED) generating light at a high efficiency and with low power consumption. The optical driver 122 is configured to supply and block the power supplied to the LED or to adjust the magnitude of power being supplied to the LED, and may be implemented as a printed circuit board (PCB) having a plurality of LEDS electrically mounted thereon.

The diffusion plate 130 is a semi-transparent panel that is located between the display panel 110 and the backlight unit 120, to diffuse light provided from the backlight unit 120 to provide a plane of the diffusion plate 130 such that overall color and brightness are uniformly represented. The diffusion plate 130 enhances the brightness of light emitted from the backlight unit 120 and supplies the brightness enhanced light to the display panel 110.

That is, the diffusion plate 130 expands the output range of the light of the LED of the backlight unit 120 and maintains the overall brightness to be uniform. The display device may further include the protection sheet 140 to protect the display panel 110 from the outside impact.

The protection sheet 140 may be disposed between the display panel 110 and the diffusion plate 130 and may further include glass and a filter. The glass protects the filter from being broken by external impact, and the filter includes an optical characteristic film, an Electro Magnetic Interference (EMI) shielding film and an ultraviolet shielding film.

The optical characteristic film reduces the brightness of red (R) and green (G) among the light incident onto the display panel 110 while increasing the brightness of blue (B), thereby enhancing the optical characteristics. The EMI shielding film is configured to shield electromagnetic waves to prevent electromagnetic waves introduced to the display panel from being discharged outside.

In addition, the ultraviolet shielding film is configured to shield ultraviolet radiation emitted from the display panel to prevent a predetermined level or more of ultraviolet radiation from being emitted to the outside, so that signals transmitted by use of ultraviolet, for example, signals of a remote controller, are transmitted normally.

The support member 150 supports the display panel 110, the diffusion plate 130, the protection sheet 140 and the light source 160, which are each disposed between a bezel 171 and a cover 172.

In addition, the support member 150 is configured to maintain the distance between the display panel 110 and the protection sheet 140, the distance between the diffusion plate 130 and the protection sheet 140, and the distance between the diffusion plate 130 and the backlight unit 120.

The chassis 160 is a panel connecting various components required to display an image and output sound, and has various printed circuit boards and various input/output devices mounted thereon.

The chassis 160 is formed of metal having superior thermal resistance and strength.

The chassis 160 has the driving module (not shown) disposed thereon to drive the display panel 110 and the backlight unit 120. The driving module (not shown) will be described later.

The housing 170 includes the bezel 171 and the cover 172.

The bezel 171 is configured to fix the display panel 110 that is supported by the support member 150, and is detachably coupled to the support member 150 or the cover 172.

The bezel 171 forms an accommodation space while being coupled to the cover 172, and the display panel 110, the backlight unit 120, the diffusion plate 130, the protection sheet 140 and the chassis 160 are disposed in the accommodation space.

The display device 100 further includes the pattern layer 180.

The pattern layer 180 is located between the backlight unit 120 and the diffusion plate 130, and includes a pattern configured to adjust the amount of light according to wavelengths introduced to the diffusion plate 130.
Here, the pattern of the pattern layer 180 may be formed based on the positions and the arrangement shape of the light sources 123 of the backlight unit 120. The pattern of the pattern layer 180 may be located at a position facing the light source 123 of the backlight unit 120.

That is, in a case in which the light source 123 of the backlight unit 120 is provided as a plurality of light sources, the patterns need to be formed at positions facing the plurality of light sources, respectively, and thus the pattern layer 180 has the same shape as an arrangement shape of the plurality of light sources.

The pattern layer 180 may be separately formed from the diffusion plate 130 or may be integrally formed with the diffusion plate 130.

When the pattern layer 180 is integrally formed with the diffusion plate 130, the pattern layer 180 is formed on the diffusion plate 130 through various methods, such as an application, a printing, a coating and a bonding. This will be described with reference to FIGS. 5A, 5B, 6, 7A, 7B and 8.

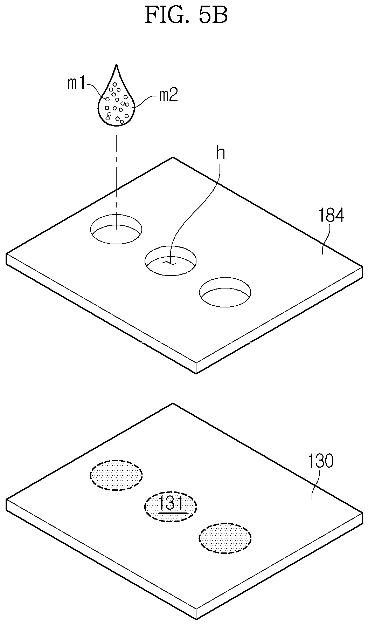

FIGS. 5A and 5B illustrate an example of the display device including a pattern layer integrally formed with the diffusion plate 130.

Referring to FIG. 5A, the diffusion plate 130 is composed of a diffusion layer having a plate shape, and the diffusion layer includes a first region 131 adjacent to a first pattern 181 of the patter layer 180, and a second region 132 adjacent to a second pattern 182 of the pattern layer 180.

The first region 131 of the diffusion plate 130 is a region to which light in a first wavelength range is introduced and the second region 132 is a region to which light in a second wavelength range is introduced, and the diffusion plate 130 is configured to mix light in the first wavelength range with light the second wavelength range to distribute the mixed light to suit the plane of the diffusion plate 130.

To be more specific, the first region 131 is a region to which light in the first wavelength range is introduced more than light in the second wavelength range, and the second region 132 is a region to which light in the second wavelength range is introduced more than light in the first wavelength range. Accordingly, a similar amount of light at each wavelength is introduced to the inside of the diffusion layer 130, and the light at each wavelength introduced to the inside is mixed and diffused.

That is, by forming the first pattern on the diffusion plate 130, a larger amount of light in the first wavelength range is introduced to the diffusion plate 130.

The pattern layer 180 includes the first pattern 181 increasing the transmittance of light in the first wavelength range to be greater than the transmittance of light in the second wavelength range, and the second pattern 182 increasing the transmittance of light in the second wavelength range to be greater than the transmittance of light in the first wavelength range.

The first wavelength range is a relatively short-wavelength range, and the second wavelength range is a range other than the short-wavelength range. The color of light belonging to the short-wavelength range corresponds to a blue color series.

The first pattern 181 is a pattern formed of a first mixture material having first material m1 that is semi-transparent and of a white color mixed with a second material m2 formed of a bead-shaped material having a blue color. The second pattern 182 is provided as an empty area except for the first pattern 181.

In addition, the first pattern 181 may be formed of bead-shaped material having a blue color.

As the first pattern 181 is formed using blue ink having a bead shape, the surface area for reflecting and scattering the short-wavelength light is enlarged, thereby enhancing the efficiency in compensating for the short-wavelength light.

In addition, the first pattern 181 is formed on the first region 131 of the diffusion plate 130, and the second pattern 182 is formed on the second region 132, that is, the remaining region of the diffusion plate 130. The first pattern 181 may be formed using a printing method.

The first pattern 181 is formed at a position corresponding to a position of the light source 123 of the backlight unit 120, and has an area A2 larger than an area A1 of the light source 123.

The area A2 of the first pattern 181 may be about five to six times larger than the area A1 of the light source 123, and may have a thickness B of about sum to 20um.

Hereinafter, a method of forming the pattern layer 180 on the diffusion plate 130 will be described with reference to FIG. 5B.

First, the diffusion plate 130 that is semi-transparent is disposed, and a mask 184 is disposed at one side of the diffusion plate 130.

Here, the mask 184 includes a plurality of holes h, and a hole h of the plurality of holes h is provided at a position corresponding to the light source 123 of the backlight unit 120, and corresponding to a location in which the first pattern 181 is formed.

Thereafter, in a state in which the mask 184 is disposed at the one side of the diffusion plate 130, mixture material m1+m2 having first material and second material mixed with each other is printed on the diffusion plate 130, and then the mask 184 is separated from the diffusion plate 130.

Through such, the first pattern 181 formed of the mixture material mi+m2 is formed on the first region 131 of the diffusion plate 130.

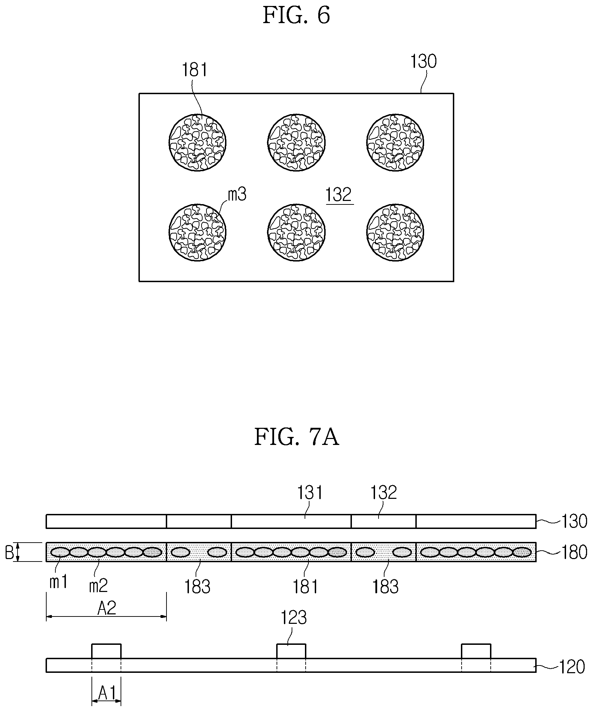

FIG. 6 is a drawing illustrating another example of the display device including the pattern layer integrally formed with the diffusion plate 130.
Referring to FIG. 6, the diffusion plate 130 is composed of a diffusion layer having a plate shape, and the diffusion layer may include the first region 131 adjacent to the first pattern 181 of the pattern layer 180 and the second region 132 adjacent to a remaining region of the pattern layer 180 other than the first pattern 181.

The pattern layer 180 includes the first pattern 181 increasing transmittance of light in the first wavelength range, that is, the short-wavelength range.

Here, the first pattern 181 is a pattern formed by irregularly forming blue color ink m3 on the first region 131 of the diffusion plate 130, and the pattern is formed at a position corresponding to the position of the light source of the backlight unit.

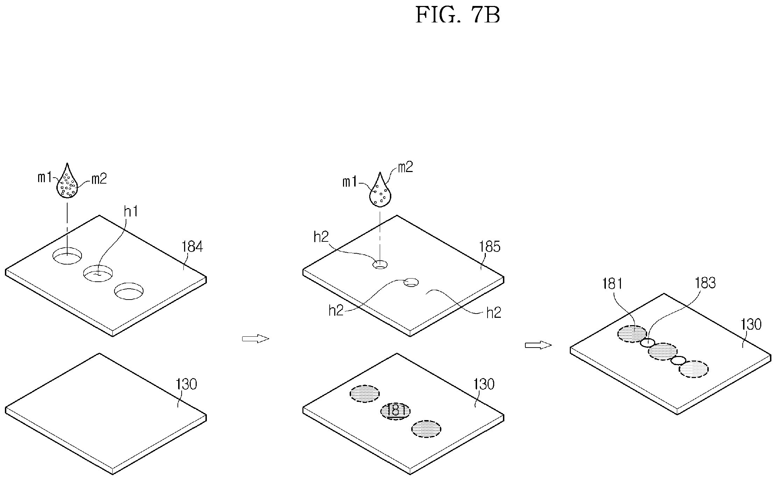

FIGS. 7A and 7B are drawings illustrating another example of the display device including a pattern layer integrally formed with the diffusion plate 130.

Referring to FIG. 7A, the diffusion plate 130 is composed of a diffusion layer having a plate shape, and the diffusion layer includes the first region 131 adjacent to the first pattern 181 of the patter layer 180, and the second region 132 adjacent to a second pattern 183 of the pattern layer 180. In alternative embodiments the first region 131 may oppose or face the first pattern 181 of the patter layer 180, and the second region 132 may oppose or face the second pattern 183 of the pattern layer 180.

The pattern layer 180 includes the first pattern 181 and the second pattern 183.

Here, the second pattern 183 is a pattern corresponding to a remaining region of the pattern layer 180 except for the first pattern 181. In addition, the second pattern 183 may be a pattern corresponding to a portion adjacent to the first pattern 181 in the remaining region of the pattern layer 180 except for the first pattern 181.

The first pattern 181 is a pattern formed of first mixture material having a first material m1 that is semi-transparent and of a white color mixed with a second material m2 formed of a bead-shaped material having a blue color. The second pattern 183 is a pattern formed of a second mixture material that has a smaller percentage of the second material m2 in comparison to the first mixture material.

That is, the first pattern 181 is a pattern printed using the first mixture material and the second pattern 183 is a pattern printed using the second mixture material.

The first pattern 181 is formed at a position corresponding to a position of the light source 123 of the backlight unit and has an area A2 larger than an area of A1 of the light source 123.

The area A2 of the first pattern 181 may be about five to six times larger than the area A1 of the light source 123, and may have a thickness B of about sum to 20um.

Hereinafter, a method of forming the first pattern 181 and the second pattern 183 of the pattern layer 180 on the diffusion plate 130 will be described with reference to FIG. 7B.

First, the diffusion plate 130 that is semi-transparent is disposed, and a first mask 184 is disposed at one side of the diffusion plate 130.

Here, the first mask 184 includes a plurality of first holes h1, and the first hole h1 of the plurality of first holes h1 is a hole that is provided at a position corresponding to the light source 123 of the backlight unit 120 and in which the first pattern 181 is formed.

Thereafter, in a state in which the first mask 184 is disposed at the one side of the diffusion plate 130, the first mixture material m1+m2 composed of first material and second material mixed with each other is printed on the diffusion plate 130, and then the first mask 184 is separated from the diffusion plate 130.

Through such, the first pattern 181 formed of the first mixture material m1+m2 is formed on the first region 131 of the diffusion plate 130.

Thereafter, a second mask 185 is disposed at the one side of the diffusion plate 130.

Here, the second mask 185 includes a plurality of second holes h2, and the hole h2 of the plurality of second holes h2 is a hole that is formed at a position except for the position of the first hole h1 and in which the second pattern 182 is formed.

Thereafter, in a state in which the second mask 185 is disposed at the one side of the diffusion plate 130, the second mixture material m1+m2 having a smaller percentage of the second material when compared to the first mixture material is printed on the diffusion plate 130, and then the second mask 185 is separated from the diffusion plate 130.

Through such, the second pattern 183 formed of the second mixture material m1+m2 is formed on the second region 132 of the diffusion plate 130.

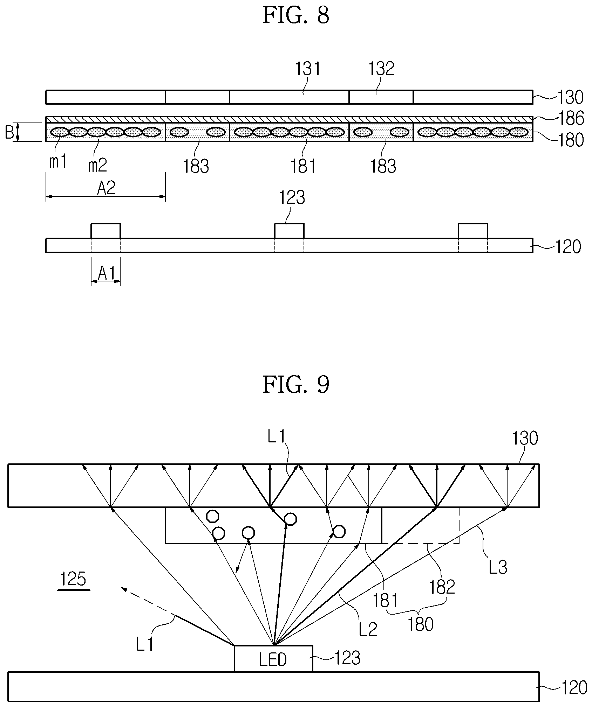

FIG. 8 is a drawing illustrating an example of a display device including a pattern layer that is separately formed from the diffusion plate 130.

The pattern layer 180 is disposed on the diffusion plate 130 while coming into close contact with or while being spaced apart from the diffusion plate 130.

The diffusion plate 130 includes the first region 131 adjacent to the first pattern 181 of the patter layer 180, and the second region 132 adjacent to the second pattern 183 of the pattern layer 180.

The first region 131 of the diffusion plate 130 is a region to which light in a first wavelength range is introduced and the second region 132 is a region to which light in a second wavelength range is introduced, and the diffusion plate 130 is configured to mix light in the first wavelength range with light the second wavelength range to distribute the mixed light to suit a plane of the diffusion plate 130.

The pattern layer 180 includes the first pattern 181 and the second pattern 183.

The patter layer 180 may further include a sheet 186 on which the first pattern 181 and the second pattern 183 are disposed.

The first pattern 181 is a pattern formed of first mixture material having a first material m1 that is semi-transparent and of a white color mixed with a second material m2 formed of a bead-shaped material having a blue color. The second pattern 183 is a pattern formed of a second mixture material that has a smaller percentage of the second material m2 in comparison to the first mixture material.

That is, the first pattern 181 is a pattern printed using the first mixture material and the second pattern 183 is a pattern printed using the second mixture material.

The first pattern 181 is formed at a position corresponding to a position of the light source 123 of the backlight unit 120 and has an area A2 larger than an area A1 of the light source 123.

The area A2 of the first pattern 181 may be about five to six times larger than the area A1 of the light source 123, and may have a thickness B of about sum to 20um.

The first pattern 181 increases the transmittance of light in the first wavelength range among the light emitted from the backlight unit 120 that is a short-wavelength range, while reducing the transmittance of light in the second wavelength range that is the remaining wavelength range except for the short-wavelength range.

That is, the first pattern 181 of the pattern layer 180 allows a larger amount of light in the first wavelength range to pass therethrough while allowing a smaller amount of light in the second wavelength range to pass therethrough.

Meanwhile, the second pattern 183 of the pattern layer 180 allows a larger amount of light in the second wavelength range to pass therethrough while allowing a smaller amount of light in the first wavelength range to pass therethrough.

This will be described with reference to FIG. 9.

The backlight unit 120 is disposed while being spaced apart from the diffusion plate 130. That is, a diffusion space 125 is formed between the backlight unit 120 and the diffusion plate 130 such that the light emitted from the light source123 of the backlight unit is primarily diffused therein.

The light emitted from the light source 123 of the backlight unit 120 includes light in various wavelengths, and loss of most of light L1 in the short-wavelength range occurs in the diffusion space 125, and light L2 and light L3 in the remaining wavelength ranges that pass by the diffusion space 125 are introduced to the diffusion plate 130.

That is, a series of red color light having a long wavelength among the light emitted from the light source 123 of the backlight unit 120 is diffused to the diffusion plate 130, but blue series light in a short wavelength range having high scattering characteristic is scattered without being diffused to the diffusion plate 130.

The light in the diffusion space 125 passing through the pattern layer 180 is introduced to the diffusion plate 130, and the light introduced to the diffusion plate 130, while being mixed with each other and diffused, passes through the diffusion plate 130. The light passing through the diffusion plate 130 is introduced to the display panel 110. Hereinafter, a process of the light in the diffusion space 125 being introduced to the diffusion plate 130 after passing through the pattern layer 180 will be described.

Light introduced to the first pattern 181 of the pattern layer 180 among the light in the diffusion space 125 is reflected and scattered by the bead shape material having a blue color, and then emitted toward the first region 131 of the diffusion plate 130. In this case, the light Li introduced to the first pattern 181 is introduced to the diffusion plate 130 while having short-wavelength range light compensated by the blue color material.

That is, the first pattern 181, which is formed of material having a blue color, increases the transmission of light among light emitted from the light source of the backlight unit 120 in the first wavelength range that is a short-wavelength range, and reduces the transmission of light in the remaining wavelength range except for the short-wavelength range.

Accordingly, the first pattern 181 allows a larger amount of light in the first wavelength range to pass therethrough while allowing a smaller amount of light in the second wavelength range to pass therethrough.

As for light among the light in the diffusion space 125 that is introduced to the second pattern 182 of the pattern layer 180, light at a short-wavelength range experiences a light loss, and light in the remaining wavelength ranges L2 and L3 is emitted to the second region of the diffusion plate 130. That is, the second pattern 182 emits the light in the second wavelength range more than the light in the first wavelength range.

The light passing through the second pattern 182 represents light, in which the short-wavelength range light experiences more light loss, thereby having a relatively yellow color. The light passing through the first pattern 181 represents light having the short-wavelength range light compensated and thus has more of blue color.

The light L1 having the short-wavelength light compensated by the first pattern 181 of the pattern layer 180 and the light L2 and the light L3 passing through the second pattern 182 are introduced to the diffusion plate 130.

The diffusion plate 130 receives more of short-wavelength range light through the first pattern 181, and receives more of remaining wavelength range light through the second pattern 182 when compared to the short-wavelength range light.

Such a diffusion plate 130 mixes the first wavelength range light introduced to the first region 131 with the second wavelength range light introduced to the second region 132 while diffusing the mixed light, and emits the diffused light to the display panel 110.

A front end of the LED is prevented from yellowing due to a color breakup caused by slimness of the direct-type LED backlight unit.

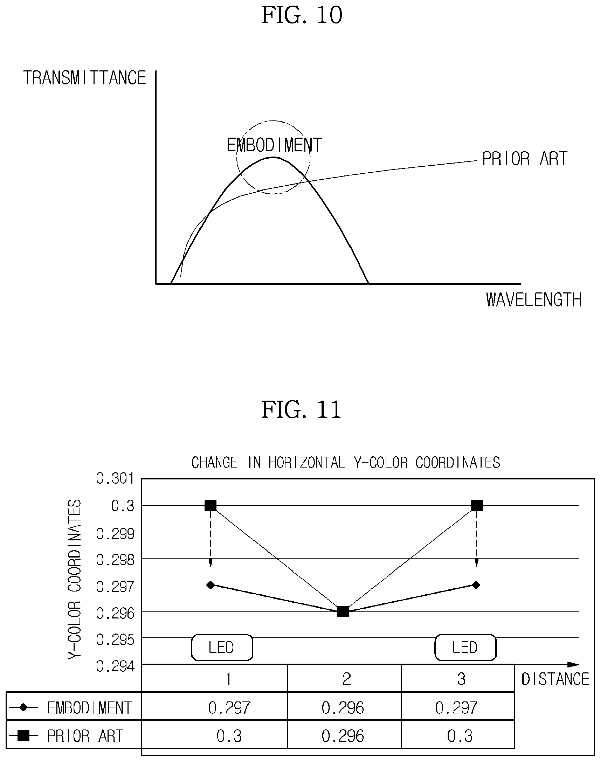

FIG. 10 is a graph showing a by-wavelength light transmittance in a case in which the first pattern of the pattern layer is printed using a bead-shaped material having a blue color.

As the first pattern of the pattern layer is formed at a position facing the light source (LED: 123) of the backlight unit, the transmission of short-wavelength range light of the light source is increased.

As described, by increasing the transmission of the short-wavelength light, the color breakup is prevented, and the color is uniformly represented on the display panel.

FIG. 11 is a graph showing horizontal y-color coordinates in a case in which the first pattern of the pattern layer is printed using a bead-shaped material having a blue color.

In a case in which the first pattern of the pattern layer is printed using a bead-shaped material having a blue color, y-color coordinates at a position facing the light source (LED) is improved by 3/1000 when compared to the conventional technology having no pattern.

In addition, in the conventional technology, the difference between a y-color coordinate value at a position facing the light source (LED) and a y-color coordinate value at a region between two light sources is greater compared to that described in the present disclosure. That is, in accordance with the present disclosure, a y-color coordinate value at a position facing a light source is almost same as a y-color coordinate value at a region between light sources.

In addition, the y-color coordinate value may be adjusted depending on the density of blue beads forming the first pattern.

Although a few embodiments of the present disclosure have been shown and described, it would be appreciated by those skilled in the art that changes may be made in these embodiments without departing from the principles of the disclosure, the scope of which is defined in the claims.

## Claims

1. A display device (100) comprising:
a display panel (110) configured to display an image;
a backlight unit (120) configured to emit light toward the display panel, wherein the backlight unit (120) comprises a plurality of light sources (123);
a pattern layer (180) positioned between the backlight unit and the display panel and including a first pattern (181) configured to compensate for blue-wavelength light among light emitted from the backlight unit, wherein each constituent of the first pattern (181) has a blue color and is configured to allow a larger amount of light emitted by the backlight unit (120) in a blue-wavelength range to pass therethrough and a smaller amount of light emitted by the backlight unit (120) in a remaining range except for the blue-wavelength range to pass therethrough, and wherein a position of each constituent of the first pattern (181) is arranged to face a position of one of the plurality of light sources of the backlight unit; and
a diffusion plate (130) configured to mix the compensated blue-wavelength light and the light emitted from the backlight unit, and arranged to diffuse the mixed light, wherein the diffusion plate (130) is positioned between the pattern layer (180) and the display panel (120), and wherein the light emitted by the backlight unit (120) in the blue wavelength range is scattered more by the diffusion plate (130) than the light emitted by the backlight unit (120) in a longer wavelength range.

2. The display device of claim 1, wherein the first pattern (181) having the blue color comprises a bead-shaped material having the blue color.

3. The display device of claim 1 or 2, wherein each constituent of the first pattern includes a shape that corresponds to a shape of the plurality of light sources, and wherein each constituent of the first pattern (181) has an area larger than an area of the one of the plurality of light sources that it faces.

4. The display device of any one of claims 1 to 3, wherein the first pattern (181) includes a mixture material having first material mixed with a second material that is a bead-shaped material of the blue color.

5. The display device of claim 4, wherein: the pattern layer (180) includes a second pattern (182, 183), wherein each constituent of the second pattern (182, 183) is positioned between two adjacent constituents of the first pattern (181); and the first pattern (181) includes a first mixture material, and the second pattern (182, 183) includes a second mixture material having a smaller percentage of the second material when compared to the first mixture material.

6. The display device of any one of claims 1 to 5, wherein the pattern layer is located between the diffusion plate and the backlight unit and the pattern layer contacts the diffusion plate.

7. The display device of any one of claims 1 to 6, wherein:
the diffusion plate is arranged to mix the light emitted from the backlight unit (120) with the light passing through the pattern layer (180), and is arranged to diffuse the mixed light.

8. A method of manufacturing a display device (100), the method comprising:
providing a display panel (110) configured to display an image;
providing a backlight unit (120) configured to emit light toward the display panel, wherein the backlight unit (120) comprises a plurality of light sources (123);
providing a pattern layer (180) between the backlight unit and the display panel inlcuding a first pattern (181) configured to compensate for blue-wavelength light among light emitted from the backlight unit, wherein each constituent of the first pattern (181) has a blue color and is configured to allow a larger amount of light emitted by the backlight unit (120) in a blue-wavelength range to pass therethrough and a smaller amount of light emitted by the backlight unit (120) in a remaining range except for the blue-wavelength range to pass therethrough, and wherein a position of each constituent of the first pattern (181) is arranged to face a position of one of the plurality of light sources of the backlight unit; and
providing a diffusion plate (130) configured to mix the compensated blue-wavelength light and the light emitted from the backlight unit, wherein the diffusion plate (130) is positioned between the pattern layer and the display panel (120), and is arranged to diffuse the mixed light, and wherein the light emitted by the backlight unit (120) in the blue wavelength range is scattered more by the diffusion plate (130) than the light emitted by the backlight unit (120) in a longer wavelength.

9. The method of claim 8, wherein the first pattern (181) is a pattern formed of a bead-shaped material having the blue color, wherein the first pattern (181) is formed with a printing method.

10. The method of claim 8 or 9, wherein each constituent of the first pattern (181) is provided to have an area corresponding to a distance between the backlight unit (120) and the diffusion plate (130), wherein each constituent of the first pattern (181) is provided to have a larger area if a distance between the backlight unit (120) and the diffusion plate (130) is nearer.

11. The method of any one of claims 8 to 10, wherein:
the pattern layer (180) includes a second pattern (182, 183), wherein each constituent of the second pattern (182, 183) is positioned between two adjacent constituents of the first pattern (181), wherein the first pattern (181) includes a first mixture material having a first material mixed with a second material that is a bead-shaped material of the blue colour, and the second pattern includes a second mixture material having a smaller percentage of the second material when compared to the first mixture material; and
the first pattern is a pattern formed by primarily printing the first mixture material; and
the second pattern is a pattern formed by secondarily printing the second mixture material.

12. The method of claim 11, wherein a mixture ratio of the first material and the second material is determined based on a distance between the backlight unit (120) and the pattern layer (180).

13. The method of any one of claims 8 to 12, wherein the first pattern (181) of the pattern layer (180) is formed by irregularly coating blue color ink.

## Patentansprüche

1. Anzeigevorrichtung (100), die Folgendes umfasst:
ein Anzeigefeld (110), das dazu konfiguriert ist, ein Bild anzuzeigen;
eine Hintergrundbeleuchtungseinheit (120), die dazu konfiguriert ist, Licht in Richtung des Anzeigefelds auszustrahlen, wobei die Hintergrundbeleuchtungseinheit (120) eine Vielzahl von Lichtquellen (123) umfasst;
eine Musterschicht (180), die zwischen der Hintergrundbeleuchtungseinheit und dem Anzeigefeld positioniert ist und ein erstes Muster (181) umfasst, das dazu konfiguriert ist, Licht blauer Wellenlänge in dem von der Hintergrundbeleuchtungseinheit ausgestrahltem Licht auszugleichen, wobei jeder Bestandteil des ersten Musters (181) eine blaue Farbe aufweist und dazu konfiguriert ist, eine größere Menge des von der Hintergrundbeleuchtungseinheit (120) ausgestrahlten Lichts in einem blauen Wellenlängenbereich hindurchzulassen und eine kleinere Menge des von der Hintergrundbeleuchtungseinheit (120)in einem verbleibenden Bereich außer dem blauen Wellenlängenbereich ausgestrahlten Lichts hindurchzulassen, und wobei eine Position jedes Bestandteils des ersten Musters (181) dazu angeordnet ist, einer Position einer der Vielzahl von Lichtquellen der Hintergrundbeleuchtungseinheit zugewandt zu sein; und
eine Diffusionsplatte (130), die dazu konfiguriert ist, das ausgeglichene Licht blauer Wellenlänge und das von der Hintergrundbeleuchtungseinheit ausgestrahlte Licht zu mischen, und dazu angeordnet ist, das gemischte Licht zu streuen, wobei die Diffusionsplatte (130) zwischen der Musterschicht (180) und dem Anzeigefeld (120) positioniert ist, und wobei das von der Hintergrundbeleuchtungseinheit (120) im blauen Wellenlängenbereich ausgestrahlte Licht von der Diffusionsplatte (130) mehr gestreut wird als das von der Hintergrundbeleuchtungseinheit (120) im längeren Wellenlängenbereich ausgestrahlte Licht.

2. Anzeigevorrichtung nach Anspruch 1, wobei das die blaue Farbe aufweisende erste Muster (181) ein die blaue Farbe aufweisendes perlenförmiges Material umfasst.

3. Anzeigevorrichtung nach Anspruch 1 oder 2, wobei jeder Bestandteil des ersten Musters eine Form umfasst, die einer Form der Vielzahl von Lichtquellen entspricht, und wobei jeder Bestandteil des ersten Musters (181) eine Fläche aufweist, die größer ist als eine Fläche der einen der Vielzahl von Lichtquellen, der er zugewandt ist.

4. Anzeigevorrichtung nach einem der Ansprüche 1 bis 3, wobei das erste Muster (181) ein Mischmaterial umfasst, das ein erstes Material aufweist, das mit einem zweiten Material gemischt ist, bei dem es sich um ein perlenförmiges Material der blauen Farbe handelt.

5. Anzeigevorrichtung nach Anspruch 4, wobei:
die Musterschicht (180) ein zweites Muster (182, 183) umfasst, wobei jeder Bestandteil des zweiten Musters (182, 183) zwischen zwei benachbarten Bestandteilen des ersten Musters (181) positioniert ist; und
das erste Muster (181) ein erstes Mischmaterial umfasst und das zweite Muster (182, 183) ein zweites Mischmaterial umfasst, das verglichen mit dem ersten Mischmaterial einen kleineren Anteil des zweiten Materials aufweist.

6. Anzeigevorrichtung nach einem der Ansprüche 1 bis 5, wobei die Musterschicht zwischen der Diffusionsplatte und der Hintergrundbeleuchtungseinheit liegt und die Musterschicht die Diffusionsplatte berührt.

7. Anzeigevorrichtung nach einem der Ansprüche 1 bis 6, wobei:
die Diffusionsplatte dazu angeordnet ist, das von der Hintergrundbeleuchtungseinheit (120) ausgestrahlte Licht mit dem durch die Musterschicht (180) gelangenden Licht zu mischen, und dazu angeordnet ist, das gemischte Licht zu streuen.

8. Verfahren zum Herstellen einer Anzeigevorrichtung (100), wobei das Verfahren Folgendes umfasst:
Bereitstellen einer Anzeigetafel (110), die dazu konfiguriert ist, ein Bild anzuzeigen;
Bereitstellen einer Hintergrundbeleuchtungseinheit (120), die dazu konfiguriert ist, Licht in Richtung des Anzeigefelds auszustrahlen, wobei die Hintergrundbeleuchtungseinheit (120) eine Vielzahl von Lichtquellen (123) umfasst;
Bereitstellen einer Musterschicht (180), zwischen der Hintergrundbeleuchtungseinheit und dem Anzeigefeld, die ein erstes Muster (181) umfasst, das dazu konfiguriert ist, Licht blauer Wellenlänge aus dem von der Hintergrundbeleuchtungseinheit ausgestrahltem Licht auszugleichen, wobei jeder Bestandteil des ersten Musters (181) eine blaue Farbe aufweist und dazu konfiguriert ist, eine größere Menge des von der Hintergrundbeleuchtungseinheit (120) ausgestrahlten Lichts in einem blauen Wellenlängenbereich hindurchzulassen und eine kleinere Menge des von der Hintergrundbeleuchtungseinheit (120) in einem verbleibenden Bereich außer dem blauen Wellenlängenbereich ausgestrahlten Lichts hindurchzulassen, und wobei eine Position jedes Bestandteils des ersten Musters (181) dazu angeordnet ist, einer Position einer der Vielzahl von Lichtquellen der Hintergrundbeleuchtungseinheit zugewandt zu sein; und
Bereitstellen einer Diffusionsplatte (130), die dazu konfiguriert ist, das ausgeglichene Licht blauer Wellenlänge und das von der Hintergrundbeleuchtungseinheit ausgestrahlte Licht zu mischen, wobei die Diffusionsplatte (130) zwischen der Musterschicht (180) und dem Anzeigefeld (120) positioniert ist und dazu angeordnet ist, das gemischte Licht zu streuen, und wobei das von der Hintergrundbeleuchtungseinheit (120) im blauen Wellenlängenbereich ausgestrahlte Licht von der Diffusionsplatte (130) mehr gestreut wird als das von der Hintergrundbeleuchtungseinheit (120) im einer längeren Wellenlänge ausgestrahlte Licht.

9. Verfahren nach Anspruch 8, wobei es sich bei dem ersten Muster (181) um ein Muster handelt, das aus einem die blaue Farbe aufweisenden perlenförmigen Material gebildet ist, wobei das erste Muster (181) mit einem Druckverfahren gebildet wird.

10. Verfahren nach Anspruch 8 oder 9, wobei jeder Bestandteil des ersten Musters (181) bereitgestellt ist, um eine Fläche aufzuweisen, die einem Abstand zwischen der Hintergrundbeleuchtungseinheit (120) und der Diffusionsplatte (130) entspricht, wobei jeder Bestandteil des ersten Musters (181) bereitgestellt ist, um eine größere Fläche aufzuweisen, wenn ein Abstand zwischen der Hintergrundbeleuchtungseinheit (120) und der Diffusionsplatte (130) näher ist.

11. Verfahren nach einem der Ansprüche 8 bis 10, wobei:
die Musterschicht (180) ein zweites Muster (182, 183) umfasst, wobei jeder Bestandteil des zweiten Musters (182, 183) zwischen zwei benachbarten Bestandteilen des ersten Musters (181) positioniert ist, wobei das erste Muster (181) ein erstes Mischmaterial umfasst, das ein erstes Material aufweist, das mit einem zweiten Material gemischt ist, bei dem es sich um ein perlenförmiges Material der blauen Farbe handelt, und das zweite Muster ein zweites Mischmaterial umfasst, das verglichen mit dem ersten Mischmaterial einen kleineren Anteil des zweiten Materials aufweist; und
es sich bei dem ersten Muster um ein Muster handelt, das durch primäres Drucken des ersten Mischmaterials gebildet wird; und
es sich bei dem zweiten Muster um ein Muster handelt, das durch sekundäres Drucken des zweiten Mischmaterials gebildet wird.

12. Verfahren nach Anspruch 11, wobei ein Mischungsverhältnis des ersten Materials und des zweiten Materials basierend auf einem Abstand zwischen der Hintergrundbeleuchtungseinheit (120) und der Musterschicht (180) bestimmt wird.

13. Verfahren nach einem der Ansprüche 8 bis 12, wobei das erste Muster (181) der Musterschicht (180) durch unregelmäßiges Auftragen von Tinte mit blauer Farbe gebildet wird.

## Revendications

1. Dispositif d'affichage (100) comprenant :
un panneau d'affichage (110) configuré pour afficher une image ;
une unité de rétroéclairage (120) configurée pour émettre de la lumière en direction du panneau d'affichage, l'unité de rétroéclairage (120) comprenant une pluralité de sources de lumière (123) ;
une couche à motifs (180) positionnée entre l'unité de rétroéclairage et le panneau d'affichage et comportant un premier motif (181) configuré pour compenser la lumière à longueur d'onde bleue parmi la lumière émise depuis l'unité de rétroéclairage, chaque constituant du premier motif (181) ayant une couleur bleue et étant configuré pour permettre à une plus grande quantité de lumière émise par l'unité de rétroéclairage (120) dans une gamme de longueur d'onde bleue de passer à travers et à une plus petite quantité de lumière émise par l'unité de rétroéclairage (120) dans une gamme restante sauf la gamme de longueur d'onde bleue de passer à travers, et une position de chaque constituant du premier motif (181) étant prévue pour faire face à une position d'une de la pluralité de sources de lumière de l'unité de rétroéclairage ; et
une plaque de diffusion (130) configurée pour mélanger la lumière à longueur d'onde bleue compensée et la lumière émise depuis l'unité de rétroéclairage et prévue pour diffuser la lumière mélangée, la plaque de diffusion (130) étant positionnée entre la couche à motifs (180) et le panneau d'affichage (120) et la lumière émise par l'unité de rétroéclairage (120) dans la gamme de longueur d'onde bleue étant davantage diffusée par la plaque de diffusion (130) que la lumière émise par l'unité de rétroéclairage (120) dans une gamme de longueur d'onde plus longue.

2. Dispositif d'affichage selon la revendication 1, dans lequel le premier motif (181) ayant la couleur bleue comprend un matériau en forme de bourrelet ayant la couleur bleue.

3. Dispositif d'affichage selon la revendication 1 ou la revendication 2, dans lequel chaque constituant du premier motif comporte une forme qui correspond à une forme de la pluralité de sources de lumière et dans lequel chaque constituant du premier motif (181) a une superficie supérieure à une superficie de l'une de la pluralité de sources de lumière à laquelle elle fait face.

4. Dispositif d'affichage selon l'une quelconque des revendications 1 à 3, dans lequel le premier motif (181) comporte un matériau mixte ayant un premier matériau mélangé à un deuxième matériau qui est un matériau en forme de bourrelet de la couleur bleue.

5. Dispositif d'affichage selon la revendication 4, dans lequel :
la couche à motifs (180) comporte un deuxième motif (182, 183), chaque constituant du deuxième motif (182, 183) étant positionné entre deux constituants adjacents du premier motif (181) ; et
le premier motif (181) comporte un premier matériau mixte et le deuxième motif (182, 183) comporte un deuxième matériau mixte ayant un plus petit pourcentage du deuxième matériau comparé au premier matériau mixte.

6. Dispositif d'affichage selon l'une quelconque des revendications 1 à 5, dans lequel la couche à motifs est située entre la plaque de diffusion et l'unité de rétroéclairage et la couche à motifs est en contact avec la plaque de diffusion.

7. Dispositif d'affichage selon l'une quelconque des revendications 1 à 6, dans lequel :
la plaque de diffusion est prévue pour mélanger la lumière émise depuis l'unité de rétroéclairage (120) avec la lumière qui passe à travers la couche à motifs (180) et est prévue pour diffuser la lumière mélangée.

8. Procédé de fabrication d'un dispositif d'affichage (100), le procédé comprenant :
la prévision d'un panneau d'affichage (110) configuré pour afficher une image ;
la prévision d'une unité de rétroéclairage (120) configurée pour émettre de la lumière en direction du panneau d'affichage, l'unité de rétroéclairage (120) comprenant une pluralité de sources de lumière (123) ;
la prévision entre l'unité de rétroéclairage et le panneau d'affichage d'une couche à motifs (180) comportant un premier motif (181) et configurée pour compenser la lumière à longueur d'onde bleue parmi la lumière émise depuis l'unité de rétroéclairage, chaque constituant du premier motif (181) ayant une couleur bleue et étant configuré pour permettre à une plus grande quantité de lumière émise par l'unité de rétroéclairage (120) dans une gamme de longueur d'onde bleue de passer à travers et à une plus petite quantité de lumière émise par l'unité de rétroéclairage (120) dans une gamme restante sauf la gamme de longueur d'onde bleue de passer à travers, et une position de chaque constituant du premier motif (181) étant prévue pour faire face à une position d'une de la pluralité de sources de lumière de l'unité de rétroéclairage ; et
la prévision d'une plaque de diffusion (130) configurée pour mélanger la lumière à longueur d'onde bleue compensée et la lumière émise depuis l'unité de rétroéclairage, la plaque de diffusion (130) étant positionnée entre la couche à motifs (180) et le panneau d'affichage (120) et étant prévue pour diffuser la lumière mélangée, et la lumière émise par l'unité de rétroéclairage (120) dans la gamme de longueur d'onde bleue étant davantage diffusée par la plaque de diffusion (130) que la lumière émise par l'unité de rétroéclairage (120) à une longueur d'onde plus longue.

9. Procédé selon la revendication 8, dans lequel le premier motif (181) est un motif formé d'un matériau en forme de bourrelet ayant la couleur bleue, le premier motif (181) étant formé au moyen d'un procédé d'impression.

10. Procédé selon la revendication 8 ou la revendication 9, dans lequel chaque constituant du premier motif (181) est prévu pour avoir une superficie correspondant à une distance entre l'unité de rétroéclairage (120) et la plaque de diffusion (130), chaque constituant du premier motif (181) étant prévu pour avoir une plus grande superficie si une distance entre l'unité de rétroéclairage (120) et la plaque de diffusion (130) est plus courte.

11. Procédé selon l'une quelconque des revendications 8 à 10, dans lequel :
la couche à motifs (180) comporte un deuxième motif (182, 183), chaque constituant du deuxième motif (182, 183) étant positionné entre deux constituants adjacents du premier motif (181), le premier motif (181) comportant un premier matériau mixte ayant un premier matériau mélangé avec un deuxième matériau qui est un matériau en forme de bourrelet de la couleur bleue, et le deuxième motif comportant un deuxième matériau mixte ayant un plus petit pourcentage du deuxième matériau comparé au premier matériau mixte ; et
le premier motif est un motif formé en réalisant en premier l'impression du premier matériau mixte ; et
le deuxième motif est un motif formé en réalisant en second l'impression du deuxième matériau mixte.

12. Procédé selon la revendication 11, dans lequel un rapport de mélange du premier matériau et du deuxième matériau est déterminé en fonction d'une distance entre l'unité de rétroéclairage (120) et la couche à motifs (180) .

13. Procédé selon l'une quelconque des revendications 8 à 12, dans lequel le premier motif (181) de la couche à motifs (180) est formé en déposant de manière irrégulière de l'encre de couleur bleue.
